# EUROPEAN PATENT SPECIFICATION

(11) **EP 3 462 070 B1**
(45) Date of publication and mention of the grant of the patent: **22.07.2020**
(21) Application number: 18197660.6
(22) Date of filing: 28.09.2018
(51) Int. Cl.: F16L 37/088

(54) **RELEASABLE FITTING**
LÖSBARE VERBINDUNG
RACCORD DÉBROCHABLE

(30) Priority: 29.09.2017 IT 201700109662
(43) Date of publication of application: 03.04.2019
(73) Proprietor: Manuli Hydraulics Italia S.R.L., 20121 Milano (IT)
(72) Inventor: BECHIS, Luca, 20135 Milano (IT); RUSCONI, Giuseppe, 26027 Rivolta d'Adda (CR) (IT)
(74) Representative: Villanova, Massimo

(56) References cited:
- EP-A1- 1 770 320
- US-A1- 2003 052 484

## Description

### Background of the invention

The invention relates to a releasable fitting, in particular a fitting with quick coupling and uncoupling of the "push-to-connect" type.

Specifically, but not exclusively, the invention can be used for connecting two hydraulic items in hydraulic applications.

The prior art comprises many types of releasable fittings. Fittings of the "push to connect" type are shown in patent publications EP 1 770 320 A1, US 2003/052484 A1, US 2016/0312932 A1, US 2015/0159794 A1, and US 9,322,496 B1. EP1 770 320 A1 discloses a releasable fitting comprising tubular first and second elements, sealing means, an annular body and an elastic ring.

One of the problems of the releasable fittings of the prior art is the risk of accidental uncoupling of the connection between the male element and the female element of the fitting, due in particular to an incorrect operation of an operator, with the consequence of damage that is sometimes irremediable.

### Summary of the invention

One object of the invention is to make a releasable fitting that is able to overcome the aforesaid problem of the prior art.

One advantage is to give rise to a releasable fitting that protects against the risk of accidental uncoupling due to human error.

One advantage is to provide a fitting with quick coupling and uncoupling of the "push to connect" type, of easy, practical, rapid and immediate use, both in the insertion step and in the extraction step.

One advantage is to provide a releasable fitting of significant reliability and toughness, which is in particular usable in hydraulic applications.

One advantage is to make available a releasable fitting of the "push to connect" type that is constructionally simple and cheap.

One advantage is to prevent manual uncoupling of the fitting in the presence of pressurized fluid inside the fitting, or at least when the inner pressure of the fluid exceeds threshold values that may be relatively low (and depend on the dimensions of the fitting).

These objects and advantages, and still others, are achieved by a releasable fitting according to one or more of the claims set out below.

In one embodiment, a releasable fitting comprises a female element, a male element that is insertable into and extractable from the female element, an annular body that is slidable inside the fitting, elastic means for pressing the annular body against the female element, an elastic coupling ring pressed between the annular body and the male element, in which a thrust on the male element causes a movement of the annular body with respect to the female element generating a free space comprised between the annular body and the female element, in which an opening obtained on the female element enables an external tool to be introduced into this free space that can block the annular body in position during extraction of the male element.

### Brief description of the drawings

The invention can be better understood and implemented with reference to the enclosed drawings that illustrate one embodiment by way of non-limiting example, in which:
Figure 1 is a partially sectioned lateral view of one embodiment of a releasable fitting made in accordance with the invention, in a configuration in which the two fitting elements are uncoupled from one another;
Figure 2 shows the fitting of Figure 1 in a first inserting step of inserting the two fitting elements inside one another;
Figure 3 shows a second inserting step after the step of Figure 2;
Figure 4 shows the fitting of Figure 1 in an operating configuration in which the two fitting elements are coupled with one another;
Figure 5 shows the releasable fitting in the coupled configuration of Figure 4, in a partially sectioned view according to a section plane that passes through at least one of the openings for safe uncoupling;
Figure 6 shows an enlarged detail of Figure 5;
Figures 7 to 9 show three steps in sequence of the extraction to return to the uncoupled configuration of Figure 1;
Figure 10 shows, on a larger scale, the detail A of Figure 8.

### Detailed description

With reference to the aforesaid figures, overall with 1 a releasable fitting of the "push-to-connect" type has been indicated in which coupling is achieved by inserting axially a (male) fitting element that is pushed inside another (female) fitting element. The uncoupling operation comprises a step in which a (male) fitting element is pushed axially inside, performing a first initial pre-uncoupling stroke that enables this fitting element to be subsequently extracted axially towards the exterior.

The releasable fitting 1 may comprise, in particular, a first fitting element 2, or female fitting element, of tubular shape, which defines a coupling axis of the fitting 1. The first fitting element 2 may comprise, in particular, at least one inner sealing surface 3 (of cylindrical shape). The first fitting element 2 may comprise, in particular, at least one tubular portion 4 that has one or more through radial openings 5. It is possible to provide, as in the specific embodiment, a plurality of radial openings 5 arranged in a crown on the tubular portion 4 around the aforesaid coupling axis.

The first fitting element 2 may comprise, in particular, at least one closure portion 6 of annular shape that protrudes radially inside from the tubular portion 4. The first fitting element 2 may be provided, as in this embodiment, with an end portion 7 intended for connection (for example of screw type) with a first hydraulic device (not illustrated).

The first fitting element 2 may be made, as in this embodiment, in at least two distinct pieces (in particular two pieces made of metal, for example of steel), in which a first piece may comprise the tubular portion 4 and a second piece may comprise the closure portion 6. The two pieces may be fitted to one another, for example by a fixing ring 8.

The releasable fitting may comprise, in particular, a second fitting element 9, or male fitting element, of tubular shape, which is couplable with the first fitting element 2 along the aforesaid coupling axis. The second fitting element 9 may be provided, as in this embodiment, with an end portion 10 intended for connecting with a second hydraulic device (not illustrated).

The second fitting element 9 may comprise, in particular, at least one outer sealing surface 11 (of cylindrical shape). The second fitting element 9 may be at least partially insertable axially into the first fitting element 2 in an axial insertion direction so as to couple the outer sealing surface 11 with the inner sealing surface 3. The second fitting element 9 may be extractable axially from the first fitting element 2 in an axial extraction direction opposite the insertion direction. The second fitting element 9 may be made, as in this embodiment, of a single piece.

The second fitting element 9 may comprise, in particular, an outer surface 12 (for example at least partially of cylindrical shape), which may have, as in this embodiment, a diameter that is greater than the outer sealing surface 11. The second fitting element 9 may comprise, in particular, at least one annular recess 13 that recedes radially to the inside from the outer surface 12, in particular to house a coupling elastic ring 14, as will be explained better below.

The releasable fitting may comprise, in particular, sealing means 15 (for example at least one sealing ring) arranged between the outer sealing surface 11 and the inner sealing surface 3 when the second (male) fitting element 9 is coupled with the first (female) fitting element 2.

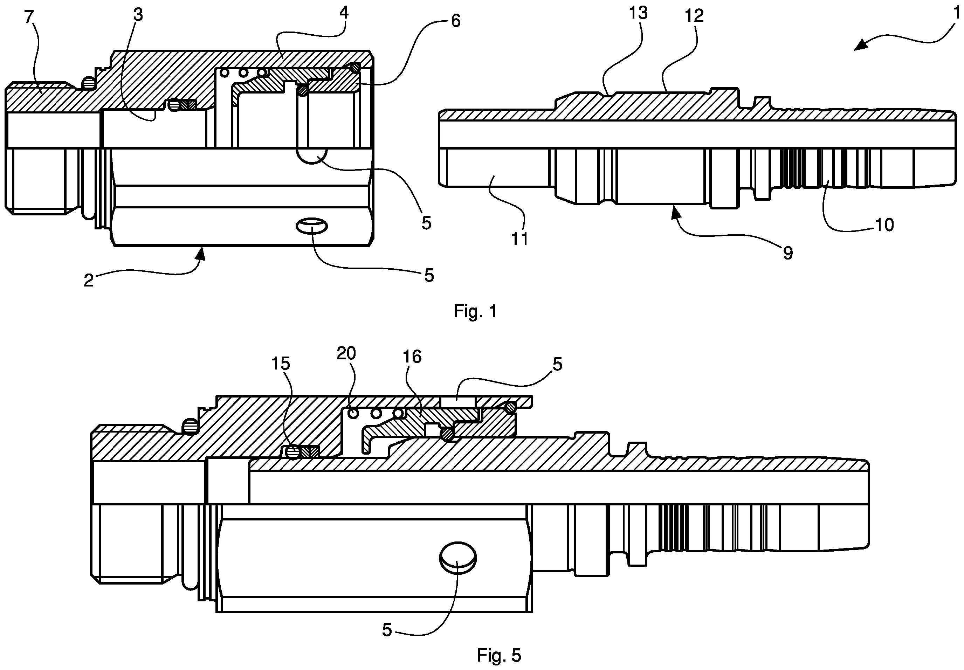

The releasable fitting may comprise, in particular, an annular body 16 that may slide axially with respect to at least the first fitting element 2. The annular body 16 may be surrounded at least partially by at least one part of the tubular portion 4 of the first fitting element 2. The annular body 16 may slide axially with the possibility of adopting at least one abutting position (see Figures 1, 4, 5 and 6) in which it abuts against the first fitting element 2 (in an abutment direction that is the same as the extraction direction of the second fitting element 9 from the first fitting element 2).

The annular body 16 may comprise, in particular, an inner surface 17 (for example at least partially of cylindrical shape) with a diameter that is greater than the outer surface 12 of the second fitting element 9. The annular body 16 may comprise, in particular, an annular projection 18 that protrudes radially inside from the inner surface 17. The annular projection 18 may perform the function of exerting radial pressure on the coupling elastic ring 14 housed in the annular recess 13 to lock in position the second fitting element 9 and prevent the axial extraction thereof in the extraction direction, as will be explained better below. The inner surface 17 of the annular body 16 may have, as in this embodiment, two annular portions 17a and 17b that are adjacent to the annular projection 18 and are arranged on two opposite sides of the annular projection 18 in an axial direction, one adjacent on one side of the annular projection 18 and the other adjacent on the opposite side. Each annular portion 17a and 17b may have an inner diameter that is greater than an inner diameter of the annular projection 18. Each annular portion 17a and 17b is configured for temporarily housing the coupling elastic ring 14 (in an enlarged configuration) during the transitional steps of insertion and/or extraction of the second fitting element 9, as will be explained better below.

The annular body 16 may comprise, in particular, a disengagement end 19. When the annular body 16 is in the abutting position, the disengagement end 19 may be in a proximal position (for example in contact or, as in this embodiment, at a relatively reduced non nil distance) with respect to the closure portion 6 of the first fitting element 2.

In the abutting position, the annular projection 18 may be, as in this embodiment, arranged abutting against the closure portion 6. In other embodiments which are not illustrated, it is possible to provide for the disengagement end 19 rather than the annular projection 18 abutting against the closure portion 6.

The releasable fitting may comprise, in particular, elastic means 20 (for example a coil spring) arranged for exerting an axial force on the annular body 16 in the extraction direction, in such a manner as to maintain the annular body 16 in the abutting position (abutting against the closure portion 6).

The releasable fitting may comprise, in particular, the coupling elastic ring 14 that, when the second fitting element 9 is inserted into the first fitting element 2 and the annular body 16 is in the abutting position, may be arranged between the inner surface 17 of the annular body 16 and the outer surface 12 of the second fitting element 9. The elastic ring 14 is configured for being housed in the annular recess 13 and may be pressed radially by the annular projection 18, to ensure fitted coupling between the two fitting elements 2 and 9. The elastic ring 14 may be made, for example, of steel for springs.

The elastic ring 14 may be contained, as in this embodiment, in an axial direction, on both sides. In particular the elastic ring 14 may be contained on one side by the closure portion 6 of the first fitting element 2 and on the opposite side by a shoulder 21 of the annular body, in particular a shoulder 21 that may be arranged adjacent to the inner surface 17 of the annular body 16.

The releasable fitting may adopt a coupling configuration in which the sealing means 15 is operational between the outer sealing surface 11 and the inner sealing surface 3. In this coupling configuration the annular body 16 may be in the abutting position and the elastic ring 14 may be housed in the annular recess 13 and be pressed radially by the annular projection 18.

In this coupling configuration the second fitting element 9 may perform a pre-uncoupling axial movement with respect to the first fitting element 2, so that the second fitting element 9 may be pushed into the insertion direction, from the coupling configuration, to perform a short stroke (i.e. the aforesaid axial pre-uncoupling movement) directed inside the fitting (i.e. in the insertion direction) to disengage the elastic ring 14 from the annular projection 18, i.e. removing the radial pressure on the elastic ring 14.

In this coupling configuration the annular body 16 may be movable axially with respect to the first fitting element 2 in the insertion direction, starting from the abutting position, so as to move the disengagement end 19 to a distal position with respect to the closure portion 6, i.e. by increasing the axial distance of the disengagement end 19 from the closure portion 6.

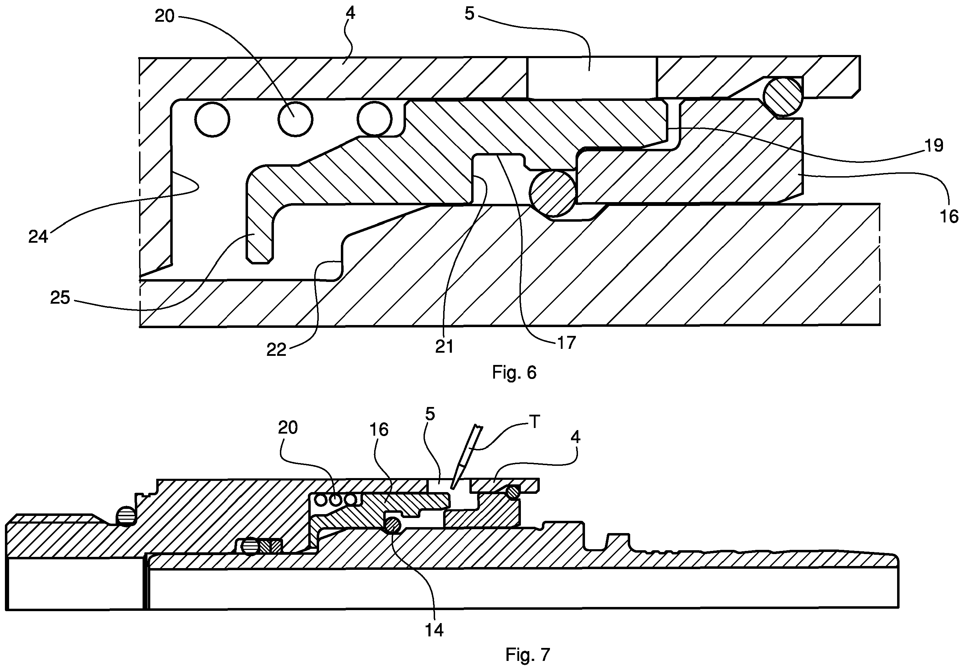

The second fitting element 9 may be provided with a thrust surface 22 intended to go against the annular body 16 whilst the second fitting element 9 performs the aforesaid pre-uncoupling movement, such that this thrust surface 22 first comes to abut against the annular body 16 and then pushes the movable annular body 16 in the insertion direction, from the abutting position to a pre-uncoupling position (see Figure 7) in which the disengagement end 19 is in the aforesaid distal position and in which a free space is defined that is comprised axially between the disengagement end 19 and the closure portion 6.

In the aforesaid pre-uncoupling position the disengagement end 19 is freely accessible from the exterior through at least one of the radial openings 5 obtained on the tubular portion 4 of the first fitting element 2, to enable an outer tool T to be introduced inside this free space, (for example a usual screwdriver) that can interact with the disengagement end 19 (for example by pointing an end of the tool T against the disengagement end 19 and levering on an edge of the radial opening 5) to prevent an axial movement of the annular body 16 in the extraction direction, such that the second fitting element 9 can be safely extracted axially in the extraction direction.

Each radial opening 5 may be arranged on the tubular portion 4 so that, in the aforesaid abutting position, the radial opening 5 is closed internally by the annular body 16. The disengagement end 19 may be closed all around laterally by the tubular portion 4 and may be closed frontally by the closure portion 6, in order to prevent access to the disengagement end 19 from the exterior, unless when the annular body 16 is moved away from the closure portion 6 during the pre-uncoupling step, generating the free space disclosed above.

The second fitting element 9 may comprise, as in this embodiment, a tapered surface 23 (for example of frustoconical shape) arranged between the annular recess 13 and the thrust surface 22. The tapered surface 23 may be intended to interact in contact with the elastic ring 14 in a step of axial insertion of the second fitting element 9 inside the first fitting element 2, to promote widening of the elastic ring 14 and the subsequent housing of the elastic ring 14 inside the annular recess 13.

It is possible to provide, as in this embodiment, for, in the pre-uncoupling position, the annular body 16 interacting in contact, in an axial direction, with a stop surface 24 arranged on the first fitting element 2. In this specific embodiment, the annular body 16 comprises a portion, for example a flanged portion 25, axially interposed between the stop surface 24 of the first fitting element 2 and the thrust surface 22 of the second fitting element 9. This stop surface 24 may be arranged, in particular, on a first shoulder of the first fitting element 2. The thrust surface 22 may be arranged, in particular, on a second shoulder of the second fitting element 9.

It is possible to provide, for example, that in the coupling configuration, the flanged portion 25 is spaced axially apart from the aforesaid first shoulder on one side and from the aforesaid second shoulder on the opposite side. It is possible to provide other embodiments which are not illustrated, in which the annular body 16 is not provided with the flanged portion 25.

The operation of reciprocal coupling of the two fitting elements 2 and 9 occurs in the following manner, with reference to Figures 1 to 4, starting from the configuration of Figure 1, in which the two fitting elements 2 and 9 are separated from one another, the annular body 16 is coupled with the first fitting element 2 and is maintained in the abutting position through the effect of the thrust of the elastic means 20, the elastic ring 14 is coupled with the annular body 16, for example at the annular projection 18.

Initially, the second fitting element 9 (male element) is inserted inside the first fitting element 2 (female element), for example by an axial thrust force that may be exerted (manually) by an operator carrying the second fitting element 9.

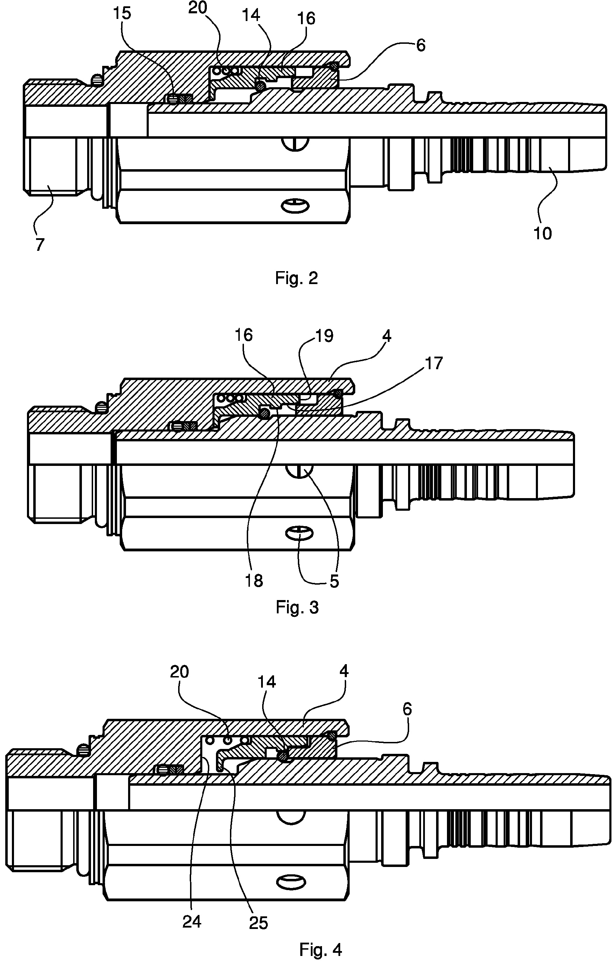

In a first insertion step, the second fitting element 9 meets the elastic ring 14, in particular the tapered surface 23 meets the elastic ring 14 and widens the elastic ring 14 gradually by moving the elastic ring 14 from the annular projection 18 until it abuts on the shoulder 21 of the annular body 16. In this step, the elastic ring 14 is radially at an annular portion 17a of inner surface 17 adjacent to the annular projection 18 (and adjacent to the shoulder 21) and with an inner diameter that is greater than the annular projection 18. By continuing the axial movement of the second fitting element 9 in the insertion direction, the axial movement of the annular body 16 is obtained (pushed by the second fitting element 9) until it meets the stop surface 24 (Figure 2). In the specific embodiment, the flanged portion 25 of the annular body 16 stops against the stop surface 24.

The second fitting element 9 may continue its axial stroke further in the insertion direction as far as a stroke end position (Figure 3) in which, for example, the thrust surface 22 of the second fitting element 9 meets and stops on the flanged portion 25 of the annular body 16, which in turn had stopped against the stop surface 24. In this position, the elastic ring 14 may enter the annular recess 13 on the outer surface 12 of the second fitting element 9.

At this point, the operator can stop exerting the thrust force on the second fitting element 9, so that, in the absence of an axial thrust force from the exterior, the elastic means 20 can push the annular body 16 into the abutting position and the fitting 1 can reach the coupling configuration of Figure 4, in which the elastic ring 14 is housed in the annular recess 13 and is pressed radially by the annular projection 18, so as to maintain the fitting 1 locked, preventing the axial extraction movement of the second fitting element 9.

In this coupling configuration, the fitting 1 may be operational and may thus be filled with pressurized fluid (oil).

The uncoupling operation is disclosed with reference to Figures 5 to 10, starting from the configuration of Figure 5 that shows the same coupling configuration of Figure 4 with the fitting 1 sectioned at one of the openings 5 provided for performing uncoupling safely.

It is firstly observed that in the coupling configuration (Figure 4 or Figure 5), in the presence of pressurized fluid inside the fitting it is not possible (beyond a certain relatively low pressure value, the value of which depends anyway on the dimensions of the fitting) to perform manual uncoupling of the fitting 1, as the inner pressure of the fluid opposes the axial movement of the second fitting element 9 in the insertion direction, preventing the pre-uncoupling movement. In general, in order to perform uncoupling of the fitting 1, the pressure inside the fitting 1 must be substantially nil, for example in a situation of absence of pressurized fluid inside the fitting, or of anyway very low pressure.

In an initial step the second fitting element 9 is pushed axially in an insertion direction, until the second fitting element 9 comes to a stop against the annular body 16, which in turn comes to a stop against the first fitting element 2 (in particular, the thrust surface 22 abuts on the flanged portion 25, which in turn abuts on the stop surface 24), as shown in Figure 7, which substantially corresponds to the situation of Figure 3. The elastic ring 14 will be housed in the recess 13 and in a non-crushed configuration, being contained by the inner surface 17, in particular by the annular portion 17a comprised between the annular projection 18 and the shoulder 21.

In this situation it is possible to insert an external tool T (for example a usual screwdriver) inside the empty space comprised axially between the disengagement end 19 and the first fitting element 2 (in particular, between the disengagement end 19 and the closure portion 6), as shown in Figure 7, to lock the annular body 16 in the retracted position stopped against the first fitting element 2 (in particular, against the stop surface 24 of the first fitting element 2), levering with the tool T on the first fitting element 2 (in particular, on the edge of a through opening 5 obtained on the tubular portion 4.

Once the annular body 16 is locked in position, so that it can no longer move axially in the extraction direction, it is possible to extract the second fitting element 9 by pulling it out axially in the extraction direction.

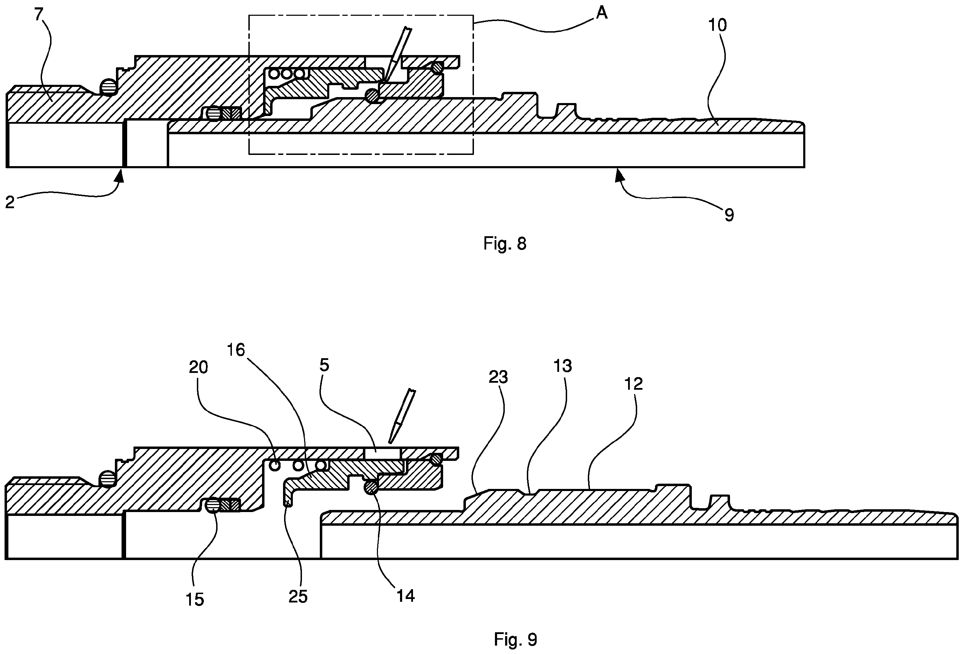

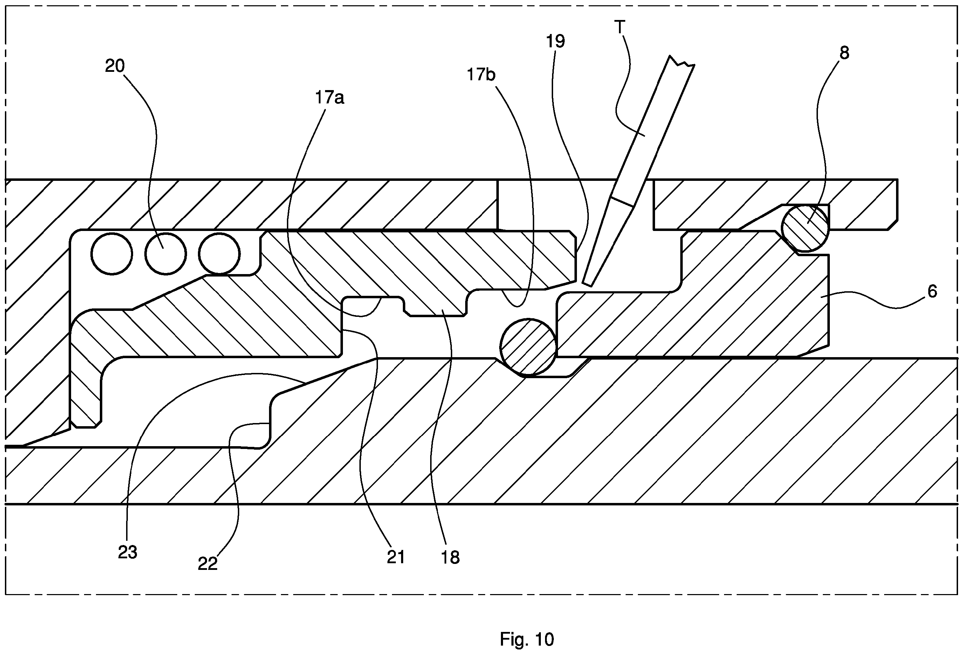

During the extraction of the second fitting element 9 the elastic ring 14 (still housed in the annular recess 13) comes to stop against the closure portion 6 (see Figures 8 and 10) in a non-crushed configuration, being contained by the inner surface 17, in particular by the annular portion 17b comprised between the annular projection 18 and the disengagement end 19. In this situation, the extraction of the second fitting element 9 may continue owing to the fact that the elastic ring 14 will have the possibility of widening (being contained, as said, by the annular portion 17b) so as to exit from the annular recess 13.

Uncoupling the fitting 1 is thus possible only by performing at least three manoeuvres, in which a first manoeuvre pushes the second fitting element 9, freeing the space used for access to the disengagement end 19, a second manoeuvre inserts the external tool T into the free space to interact with the disengagement end 19 and lock in position the annular body 16, a third manoeuvre pulls out the second fitting element 9 maintaining the annular body 16 locked by the tool T. The second fitting element 9 can be extracted only if the annular body 16 is maintained locked in position against the first fitting element 2, so the risk of accidental uncoupling through human error is practically nil. The second fitting element 9 is extracted owing to the widening of the elastic ring 14 (in order to exit the annular recess 13) which is permitted by the diameter of the inner surface 17 (in particular of the annular portion 17b) that contains the elastic ring 14 during widening.

## Claims

1. Releasable fitting (1) comprising:
- a tubular first fitting element (2) defining a coupling axis, said first fitting element (2) comprising at least one inner sealing surface (3) and at least one tubular portion (4) that includes one or more through radial openings (5), said first fitting element (2) comprising an annular closure portion (6) that projects radially inwardly from said tubular portion (4);
- a tubular second fitting element (9) comprising at least one outer sealing surface (11), said second fitting element (9) being at least partially axially insertable into said first fitting element (2) in an axial insertion direction so as to couple said outer sealing surface (11) with said inner sealing surface (3), said second fitting element (9) being axially extractable from said first fitting element (2) in an axial extraction direction that is opposite to said insertion direction, said second fitting element (9) comprising an outer surface (12) and an annular recess (13) that recesses radially inwardly from said outer surface (12) to house a coupling elastic ring (14);
- sealing means (15) arranged between said outer sealing surface (11) and said inner sealing surface (3) when said second fitting element (9) is coupled to said first fitting element (2);
- an annular body (16) at least partially surrounded by said at least one tubular portion (4) of said first fitting element (2) and axially sliding with respect to said first fitting element (2) with the possibility of assuming at least one stop position in which it abuts against said first fitting element (2), said annular body (16) comprising an inner surface (17) and an annular projection (18) that projects radially inwardly from said inner surface (17) to exert a radial pressure on a coupling elastic ring (14) housed in said annular recess (13) so as to prevent axial extraction of said second fitting element (9) in said extraction direction, said annular body (16) comprising a disengagement end (19) that is located in a proximal position with respect to said closure portion (6) when said annular body (16) is in said stop position;
- elastic means (20) arranged to exert an axial force in said extraction direction on said annular body (16) so as to maintain said annular body (16) in said stop position;
- an elastic ring (14) that is arranged between said inner surface (17) of said annular body (16) and said outer surface (12) of said second fitting element (9) and is radially pressable between said annular projection (18) and said annular recess (13) when said second fitting element (9) is coupled with said first fitting element (2) and said annular body (16) is in said stop position;
said fitting (1) being provided with the possibility of assuming a coupling configuration in which said sealing means (15) operates between said outer sealing surface (11) and said inner sealing surface (3) and in which said annular body (16) is in said stop position and said elastic ring (14) is pressed radially between said annular projection (18) and said annular recess (13);
said second fitting element (9) being capable of performing a pre-release movement with respect to said first fitting element (2) in said insertion direction starting from said coupling configuration to disengage said elastic ring (14) from said annular projection (18);
said annular body (16) being axially movable with respect to said first fitting element (2) in said insertion direction from said coupling configuration so as to bring said disengagement end (19) to a distal position with respect to said closure portion (6); said second fitting element (9) being provided with a thrust surface (22) intended to abut against said annular body (16) while said second fitting element (9) performs said pre-release movement so as to thrust said annular body (16) in said insertion direction from said coupling configuration to a pre-release position in which said disengagement end (19) is located in said distal position and a free space is defined axially comprised between said disengagement end (19) and said closure portion (6); in said pre-release position, said disengagement end (19) being freely accessible from the outside through at least one of said one or more radial openings (5) to permit the introduction into said free space of an external tool (T) which can interact with said disengagement end (19) to prevent an axial displacement of said annular body (16) in said extraction direction while said second fitting element (9) is axially extracted in said extraction direction;
said inner surface (17) of said annular body (16) including at least one annular portion (17b) having an inner diameter that is greater than an inner diameter of said annular projection (18) to allow said elastic ring (14) to widen and exit from said annular recess (13) during the extraction of said second fitting element (9) in said extraction direction.

2. Fitting according to claim 1, wherein said inner surface (17) of said annular body (16) includes at least two annular portions (17a; 17b) having an inner diameter greater than an inner diameter of said annular projection (18) and arranged on two opposite sides of said annular projection (18) in axial direction, one (17b) of which being arranged on the side facing towards the extraction direction to allow said elastic ring (14) to widen during the extraction of said second fitting element (9), the other (17a) of which being arranged on the side facing towards the insertion direction to allow said elastic ring (14) to widen during the insertion of said second fitting element (9).

3. Fitting according to claim 1 or 2, wherein said one or more radial openings (5) are internally closed by said annular body (16) in said stop position, said disengagement end (19) being closed laterally all around by said tubular portion (4) and frontally by said closure portion (6) to prevent access from outside to said disengagement end (19).

4. Fitting according to any one of the preceding claims, wherein said annular projection (18) abuts axially against said closure portion (6) in said stop position.

5. Fitting according to any one of the preceding claims, wherein said one or more radial openings (5) comprise a plurality of radial openings (5) in crown arrangement on said tubular portion (4) around said coupling axis.

6. Fitting according to any one of the preceding claims, wherein said second fitting element (9) comprises a tapered surface (23) arranged between said annular recess (13) and said thrust surface (22) and intended to interact in contact with said elastic ring (14) in an axial insertion step of said second fitting element (9) in said first fitting element (2) to promote a widening of said elastic ring (14).

7. Fitting according to any one of the preceding claims, wherein in said pre-release position, said annular body (16) interacts in axial contact with a stop surface (24) of said first fitting element (2).

8. Fitting according to claim 7, wherein said annular body (16) comprises a flanged portion (25) interposed axially between said stop surface (24) of said first fitting element (2) and said thrust surface (22) of said second fitting element (9), said stop surface (24) being arranged on a first shoulder of said first fitting element (2), said thrust surface (22) being arranged on a second shoulder of said second fitting element (9), in said coupling configuration said flange portion (25) being axially spaced from said first shoulder on one side and from said second shoulder on the opposite side.

9. Fitting according to any one of the preceding claims, wherein said elastic ring (14) is contained in axial direction, on one side by said closure portion (6) of said first fitting element (2), and on the opposite side by a shoulder (21) of said annular body (16).

10. Fitting according to any one of the preceding claims, wherein said first fitting element (2) is made of at least two separate pieces fixed to each other, wherein a first piece comprises said tubular portion (4) and a second piece comprises said closure portion (6).

## Patentansprüche

1. Lösbares Formstück (1), das Folgendes aufweist:
- ein rohrförmiges erstes Formstückelement (2), das eine Kupplungsachse definiert, wobei das erste Kupplungselement (2) wenigstens eine innere Dichtungsfläche (3) und wenigstens einen rohrförmigen Bereich (4) aufweist, der eine oder mehrere radiale Durchgangsöffnungen (5) aufweist, wobei das erste Formstückelement (2) einen ringförmigen Verschlussbereich (6) aufweist, der radial von dem rohrförmigen Bereich (4) aus nach innen hervorsteht;
- ein rohrförmiges zweites Formstückelement (9), das wenigstens eine äußere Dichtungsfläche (11) aufweist, wobei das zweite Formstückelement (9) wenigstens teilweise axial in das erste Formstückelement (2) in einer axialen Richtung einführbar ist, um so die äußere Dichtungsfläche (11) mit der inneren Dichtungsfläche (3) zu koppeln, wobei das zweite Formstückelement (9) axial aus dem ersten Formstückelement (2) in einer axialen Richtung ausziehbar ist, die der Einführrichtung gegenüberliegt, wobei das zweite Formstückelement (9) eine äußere Fläche (12) und eine ringförmige Vertiefung (13) aufweist, die sich von der äußeren Fläche (12) radial nach innen erstreckt, um einen elastischen Kupplungsring (14) aufzunehmen;
- ein Dichtungsmittel (15), das zwischen der äußeren Dichtungsfläche (11) und der inneren Dichtungsfläche (3) angeordnet ist, wenn das zweite Formstückelement (9) mit dem ersten Formstückelement (2) gekoppelt ist;
- einen ringförmigen Körper (16), der wenigstens teilweise von dem wenigstens einen rohrförmigen Bereich (4) des ersten Formstückelementes (2) umgeben ist und axial in Bezug auf das erste Formstückelement (2) mit der Möglichkeit gleitet, wenigstens eine Stopp-Position einzunehmen, in der es gegen das erste Formstückelement (2) anliegt, wobei der ringförmige Körper (16) eine Innenfläche (17) und einen ringförmigen Vorsprung (18) aufweist, der radial von der Innenfläche (17) nach innen hervorsteht, um einen radialen Druck auf einen elastischen Kupplungsring (14) auszuüben, der in der ringförmigen Vertiefung (13) aufgenommen ist, um so ein axiales Herausziehen des zweiten Formstückelementes (9) in der Ausziehrichtung zu verhindern, wobei der ringförmige Körper (16) ein Löse-Ende (19) aufweist, das in einer proximalen Position in Bezug auf den Verschlussbereich (6) angeordnet ist, wenn der ringförmige Körper (16) in der genannten Stopp-Position ist;
- ein elastisches Mittel (20), das angeordnet ist, um eine axiale Kraft in der Auszugsrichtung auf den ringförmigen Körper (16) auszuüben, um so den ringförmigen Körper (16) in der Stopp-Position zu halten;
- einen elastischen Ring (14), der zwischen der Innenfläche (17) des ringförmigen Körpers (16) und der Außenfläche (12) des zweiten Formstückelementes (9) angeordnet ist und radial zwischen dem ringförmigen Vorsprung (18) und der ringförmigen Vertiefung (13) eindrückbar ist, wenn das zweite Formstückelement (9) mit dem ersten Formstückelement (2) gekoppelt ist und der ringförmige Körper (16) in seiner Stopp-Position ist;
wobei das Formstück (1) mit der Möglichkeit versehen ist, eine Kupplungskonfiguration einzunehmen, in der das Dichtungsmittel (15) zwischen der äußeren Dichtungsfläche (11) und der inneren Dichtungsfläche (3) arbeitet, und in der der ringförmige Körper (16) in der Stopp-Position ist und der elastische Ring (14) radial zwischen den ringförmigen Vorsprung (18) und die ringförmige Vertiefung (13) gedrückt wird;
wobei das zweite Formstückelement (9) in der Lage ist, eine Vor-Löse-Bewegung in Bezug auf das erste Formstückelement (2) in der Einführrichtung auszuführen, beginnend aus der Kupplungskonfiguration, um den elastischen Ring (14) von dem ringförmigen Vorsprung (18) zu lösen;
wobei der ringförmige Körper (16) axial in Bezug auf das erste Formstückelement (2) in der Einführrichtung aus der Kupplungskonfiguration bewegbar ist, um so das Löse-Ende (19) in eine distale Position in Bezug auf den Verschlussbereich (6) zu bringen;
wobei das zweite Formstückelement (9) mit einer Stoßfläche (22) versehen ist, die dazu vorgesehen ist, gegen den ringförmigen Körper (16) anzuliegen, während das zweite Formstückelement (9) die genannte Vor-Auslöse-Bewegung ausführt, um so den ringförmigen Körper (16) in der Einführrichtung aus der Kupplungskonfiguration in eine Vor-Löse-Position zu bringen, in der das Löse-Ende (19) sich in der distalen Position befindet und ein Freiraum axial definiert ist zwischen dem Löse-Ende (19) und dem Verschlussbereich (6);
wobei in der Vor-Löse-Position das Löse-Ende (19) von der Außenseite frei durch wenigstens eine von der einen oder den mehreren radialen Öffnungen (5) zugänglich ist, um das Einführen in den Freiraum des externen Werkzeugs (T) zu erlauben, das mit dem Löse-Ende (19) zusammenwirken kann, um eine axiale Verschiebung des ringförmigen Körpers (16) in der Ausziehrichtung zu verhindern, während das zweite Formstückelement (9) axial in der Ausziehrichtung ausgezogen wird;
wobei die Innenfläche (17) des ringförmigen Körpers (16) wenigstens einen ringförmigen Bereich (17b) aufweist, die einen Innendurchmesser besitzt, der größer als ein Innendurchmesser des ringförmigen Vorsprungs (18) ist, um es zu erlauben, dass sich der elastische Ring (14) weitet und aus der ringförmigen Vertiefung (13) beim Herausziehen des zweiten Formstückelementes (9) in der Ausziehrichtung heraus gelangt.

2. Formstück nach Anspruch 1, bei dem die Innenfläche (17) des ringförmigen Körpers (16) wenigstens zwei ringförmige Bereiche (17a; 17b) aufweist, die einen Innendurchmesser haben, der größer als ein Innendurchmesser des ringförmigen Vorsprungs (18) ist und auf zwei gegenüberliegenden Seiten des ringförmigen Vorsprungs (18) in Axialrichtung angeordnet ist, wobei einer (17b) davon auf einer Seite angeordnet ist, die der Ausziehrichtung zugewandt ist, um es dem elastischen Ring (14) zu erlauben, sich während des Herausziehens des zweiten Formstückelementes (9) zu weiten, wobei das andere (17a) davon auf der Seite angeordnet ist, die der Einführrichtung zugewandt ist, um es dem elastischen Ring (14) zu erlauben, sich während des Einführens des zweiten Formstückelementes (9) zu weiten.

3. Formstück nach Anspruch 1 oder 2, bei dem eine oder mehrere radiale Öffnungen (5) von dem ringförmigen Körper (16) in der Stoppposition innen geschlossen sind, wobei das Löse-Ende (19) quer vollständig um den rohrförmigen Bereich (4) geschlossen ist und von vorn durch den Verschlussbereich (6), um einen Zugang von außen zu dem Löse-Ende (19) zu verhindern.

4. Formstück nach irgendeinem der vorhergehenden Ansprüche, bei dem der ringförmige Vorsprung (18) axial gegen den Verschlussbereich (6) in der Stopp-Position anliegt.

5. Formstück nach irgendeinem der vorhergehenden Ansprüche, bei dem eine oder mehrere radiale Öffnungen (5) eine Mehrzahl von radialen Öffnungen (5) in einer Kopfanordnung auf dem rohrförmigen Bereich (4) um die Kupplungsachse aufweisen.

6. Formstück nach irgendeinem der vorhergehenden Ansprüche, bei dem das zweite Formstückelement (9) eine verjüngte Fläche (23) aufweist, die zwischen der ringförmigen Vertiefung (13) und der Stoßfläche (22) angeordnet ist und dazu vorgesehen ist, in Kontakt mit dem elastischen Ring (14) bei einem axialen Einführschritt des zweiten Formstückelementes (9) in das erste Formstückelement (2) zu gelangen, und um ein Weiten des elastischen Rings (14) zu unterstützen.

7. Formstück nach irgendeinem der vorhergehenden Ansprüche, bei dem in der Vor-Löse-Position der ringförmige Körper (16) in einem axialen Kontakt mit einer Stoppfläche (24) des ersten Formstückelementes (2) zusammenwirkt.

8. Formstück nach Anspruch 7, bei dem der ringförmige Körper (16) einen Flanschbereich (25) aufweist, der axial zwischen der Stoppfläche (24) des ersten Formstückelementes (2) und der Stoßfläche (22) des zweiten Formstückelementes (9) angeordnet ist, wobei die Stoppfläche (24) an einer ersten Schulter des ersten Formstückelementes (2) angeordnet ist, wobei die Stoßfläche (22) auf einer zweiten Schulter des zweiten Formstückelementes (9) angeordnet ist, und wobei in der Kupplungskonfiguration der Flanschbereich (25) axial von der ersten Schulter auf einer Seite beabstandet ist und von der zweiten Schulter auf der gegenüberliegenden Seite beabstandet ist.

9. Formstück nach irgendeinem der vorhergehenden Ansprüche, bei dem der elastische Ring (14) in Axialrichtung auf einer Seite durch den Verschlussbereich (6) des ersten Formstückelementes (2) gehalten wird, und auf der gegenüberliegenden Seite durch eine Schulter (21) des ringförmigen Körpers (16).

10. Formstück nach irgendeinem der vorhergehenden Ansprüche, bei dem das erste Formstückelement (2) aus wenigstens zwei separaten Teilen hergestellt ist, die aneinander befestigt sind, wobei ein erstes Stück den rohrförmigen Bereich (4) aufweist, und ein zweites Stück den Verschlussbereich (6) aufweist.

## Revendications

1. Raccord déblocable (1) comprenant :
- un premier élément de raccord tubulaire (2) définissant un axe de couplage, ledit premier élément de raccord (2) comprenant au moins une surface d'étanchéité intérieure (3) et au moins une partie tubulaire (4) qui inclut une ou plusieurs ouvertures radiales traversantes (5), ledit premier élément de raccord (2) comprenant une partie de fermeture annulaire (6) qui dépasse de ladite partie tubulaire (4) radialement vers l'intérieur ;
- un deuxième élément de raccord tubulaire (9) comprenant au moins une surface d'étanchéité extérieure (11), ledit deuxième élément de raccord (9) étant au moins partiellement insérable axialement dans ledit premier élément de raccord (2) dans une direction d'insertion axiale de manière à coupler ladite surface d'étanchéité extérieure (11) à ladite surface d'étanchéité intérieure (3), le deuxième élément de raccord (9) pouvant être extrait axialement dudit premier élément de raccord (2) dans une direction d'extraction axiale qui est opposée à ladite direction d'insertion, ledit deuxième élément de raccord (9) comprenant une surface extérieure (12) et un creux annulaire (13) qui est creusé radialement vers l'intérieur dans ladite surface extérieure (12) pour loger une bague élastique de couplage (14) ;
- des moyens d'étanchéité (15) disposés entre ladite surface d'étanchéité extérieure (11) et ladite surface d'étanchéité intérieure (3) quand ledit deuxième élément de raccord (9) est couplé audit premier élément de raccord (2) ;
- un corps annulaire (16) au moins partiellement entouré par ladite au moins une partie tubulaire (4) dudit premier élément de raccord (2) et coulissant axialement par rapport audit premier élément de raccord (2) avec la possibilité d'adopter au moins une position d'arrêt dans laquelle il bute contre ledit premier élément de raccord (2), ledit corps annulaire (16) comprenant une surface intérieure (17) et une saillie annulaire (18) qui dépasse de ladite surface intérieure (17) radialement vers l'intérieur pour exercer une pression radiale sur la bague élastique de couplage (14) logée dans ledit creux annulaire (13) de manière à empêcher une extraction axiale dudit deuxième élément de raccord (9) dans ladite direction d'extraction, ledit corps annulaire (16) comprenant une extrémité de dégagement (19) qui est située à une position proximale par rapport à ladite partie de fermeture (6) quand ledit corps annulaire (16) est dans ladite position d'arrêt ;
- des moyens élastiques (20) disposés pour exercer une force axiale dans ladite direction d'extraction sur ledit corps annulaire (16) de manière à maintenir ledit corps annulaire (16) dans ladite position d'arrêt ;
- une bague élastique (14) qui est disposée entre ladite surface intérieure (17) dudit corps annulaire (16) et ladite surface extérieure (12) dudit deuxième élément de raccord (9) et est apte à être pressée radialement entre ladite saillie annulaire (18) et ledit creux annulaire (13) quand ledit deuxième élément de raccord (9) est couplé audit premier élément de raccord (2) et que ledit corps annulaire (16) est dans ladite position d'arrêt ;
ledit raccord (1) étant doté de la possibilité d'adopter une configuration de couplage dans laquelle lesdits moyens d'étanchéité (15) agissent entre ladite surface d'étanchéité extérieure (11) et ladite surface d'étanchéité intérieure (3) dans laquelle ledit corps annulaire (16) est dans ladite position d'arrêt et ladite bague élastique (14) est pressée radialement entre ladite saillie annulaire (18) et ledit creux annulaire (13) ;
ledit deuxième élément de raccord (9) étant apte à décrire un mouvement de pré-déblocage par rapport audit premier élément de raccord (2) dans ladite direction d'insertion en partant de ladite configuration de couplage pour dégager ladite bague élastique (14) de ladite saillie annulaire (18) ;
ledit corps annulaire (16) étant mobile axialement par rapport audit premier élément de raccord (2) dans ladite direction d'insertion depuis ladite configuration de couplage de manière à amener ladite extrémité de dégagement (19) jusqu'à une position distale par rapport à ladite partie de fermeture (6) ;
ledit deuxième élément de raccord (9) étant pourvu d'une surface de poussée (22) destinée à buter contre ledit corps annulaire (16) tandis que ledit deuxième élément de raccord (9) décrit ledit mouvement de pré-déblocage de manière à pousser ledit corps annulaire (16) dans ladite direction d'insertion depuis ladite configuration de couplage jusqu'à une position de pré-déblocage dans laquelle ladite extrémité de dégagement (19) est située dans ladite position distale et un espace libre est défini, compris axialement entre ladite extrémité de dégagement (19) et ladite partie de fermeture (6) ;
dans ladite position de pré-déblocage, ladite extrémité de dégagement (19) étant librement accessible de l'extérieur à travers l'une au moins de ladite une ou plusieurs ouvertures radiales (5) pour permettre l'introduction dans ledit espace libre d'un outil externe (T) qui peut interagir avec ladite extrémité de dégagement (19) pour empêcher un déplacement axial dudit corps annulaire (16) dans ladite direction d'extraction tandis que ledit deuxième élément de raccord (9) est extrait axialement dans ladite direction d'extraction ;
ladite surface intérieure (17) dudit corps annulaire (16) incluant au moins une partie annulaire (17b) ayant un diamètre intérieur qui est plus grand qu'un diamètre intérieur de ladite saillie annulaire (18) pour permettre à ladite bague élastique (14) de s'élargir et de sortir dudit creux annulaire (13) pendant l'extraction dudit deuxième élément de raccord (9) dans ladite direction d'extraction.

2. Raccord selon la revendication 1, dans lequel ladite surface intérieure (17) dudit corps annulaire (16) inclut au moins deux parties annulaires (17a ; 17b) ayant un diamètre intérieur plus grand qu'un diamètre intérieur de ladite saillie annulaire (18) et disposées sur deux côtés opposés de ladite saillie annulaire (18) dans ladite direction axiale, l'une (17b) étant disposée sur le côté dirigé vers la direction d'extraction pour permettre à la bague élastique (14) de s'élargir pendant l'extraction dudit deuxième élément de raccord (9), l'autre (17a) étant disposée sur le côté dirigé vers la direction d'insertion pour permettre à la bague élastique (14) de s'élargir pendant l'insertion dudit deuxième élément de raccord (9).

3. Raccord selon la revendication 1 ou 2, dans lequel ladite une ou plusieurs ouvertures radiales (5) sont fermées intérieurement par ledit corps annulaire (16) dans ladite position d'arrêt, ladite extrémité de dégagement (19) étant fermée latéralement tout autour par ladite partie tubulaire (4) et frontalement par ladite partie de fermeture (6) pour empêcher un accès, de l'extérieur, à ladite extrémité de dégagement (19).

4. Raccord selon l'une quelconque des revendications précédentes, dans lequel ladite saillie annulaire (18) bute axialement contre ladite partie de fermeture (6) dans ladite position d'arrêt.

5. Raccord selon l'une quelconque des revendications précédentes, dans lequel ladite une ou plusieurs ouvertures radiales (5) comprennent une pluralité d'ouvertures radiales (5) disposées en couronne sur ladite partie tubulaire (4) autour dudit axe de couplage.

6. Raccord selon l'une quelconque des revendications précédentes, dans lequel ledit deuxième élément de raccord (9) comprend une surface effilée (23) disposée entre ledit creux annulaire (13) et ladite surface de poussée (22) et destinée à interagir en contact avec ladite bague élastique (14) lors d'une étape d'insertion axiale dudit deuxième élément de raccord (9) dans ledit premier élément de raccord (2) pour favoriser un élargissement de ladite bague élastique (14).

7. Raccord selon l'une quelconque des revendications précédentes, dans lequel dans ladite position de pré-déblocage, ledit corps annulaire (16) interagit en contact axial avec une surface d'arrêt (24) dudit premier élément de raccord (2).

8. Raccord selon la revendication 7, dans lequel ledit corps annulaire (16) comprend une partie à rebord (25) intercalée axialement entre ladite surface d'arrêt (24) dudit premier élément de raccord (2) et ladite surface de poussée (22) dudit deuxième élément de raccord (9), ladite surface d'arrêt (24) étant disposée sur un premier épaulement dudit premier élément de raccord (2), ladite surface de poussée (22) étant disposée sur un deuxième épaulement du deuxième élément de raccord (9), dans ladite configuration de couplage ladite partie à rebord (25) étant espacée axialement dudit premier épaulement, sur un côté, et dudit deuxième épaulement, sur le côté opposé.

9. Raccord selon l'une quelconque des revendications précédentes, dans lequel ladite bague élastique (14) est contenue dans une direction axiale, sur un côté par ladite partie de fermeture (6) dudit premier élément de raccord (2), et sur le côté opposé par un épaulement (21) dudit corps annulaire (16).

10. Raccord selon l'une quelconque des revendications précédentes, dans lequel ledit premier élément de raccord (2) est fait d'au moins deux pièces séparées fixées l'une à l'autre, dans lequel une première pièce comprend ladite partie tubulaire (4) et une deuxième pièce comprend ladite partie de fermeture (6).
